# EUROPEAN PATENT SPECIFICATION

(11) **EP 3 751 352 B1**
(45) Date of publication and mention of the grant of the patent: **24.05.2023**
(21) Application number: 20177002.1
(22) Date of filing: 28.05.2020
(51) Int. Cl.: G03G 15/16

(54) **DRIVING FORCE TRANSMISSION DEVICE AND IMAGE FORMING APPARATUS**
VORRICHTUNG ZUR ÜBERTRAGUNG EINER ANTRIEBSKRAFT UND BILDERSTELLUNGSVORRICHTUNG
DISPOSITIF DE TRANSMISSION DE LA FORCE DE COMMANDE ET APPAREIL DE FORMATION D'IMAGES

(30) Priority: 10.06.2019 JP 2019107877
(43) Date of publication of application: 16.12.2020
(73) Proprietor: KYOCERA Document Solutions Inc., Osaka-shi, Osaka 540-8585 (JP)
(72) Inventor: MIZUNO, Masahiko, Osaka, 540-8585 (JP); IMANAKA, Koichi, Osaka, 540-8585 (JP)
(74) Representative: Kurig, Thomas

(56) References cited:
- JP-A- 2002 080 141
- US-A1- 2008 025 776
- US-A1- 2009 036 221

## Description

### BACKGROUND

The present invention relates to a driving force transmission device provided with a clutch and an image forming apparatus including the driving force transmission device.

An image forming apparatus includes a driving force transmission device which transmits a driving force (a rotational force) generated by a motor to a rotational shaft of a photosensitive drum or a rotational shaft of a conveyance roller. The driving force transmission device is sometime provided with an electromagnetic clutch capable of being switched between a state where a transmission of the rotational force is possible and a state where the transmission of the rotational force is interrupted. The electromagnetic clutch has a rotor and an armature which are connected to each other at a connecting part, and is configured to be switched between the state where the transmission of the rotational force is possible and the state where the transmission of the rotational force is interrupted by connecting and disconnecting the rotor and the armature. The rotational force is transmitted to an output shaft, and a rotation of an output gear fixed to the output shaft is transmitted to an input gear fixed to the rotational shaft of the photosensitive drum or the rotational shaft of the conveyance roller.

Conventionally, the end portion of the output shaft is rotatably supported by a bearing via grease. Because the output shaft rotates at a high speed, the grease is sometimes scattered from the bearing. If the scattered grease enters the inside of the electromagnetic clutch and adhered on the connecting part, the rotor and the armature slip mutually, and the electromagnetic clutch cannot be accurately switched between the state where the transmission of the rotational force is possible and the state where the transmission of the rotational force is interrupted.

Then, an image forming apparatus sometimes includes a driving force transmission means transmitting a driving force of a driving source, a clutch means selectively transmitting the driving force of the driving force transmission device, and a cover covering a connecting part between the driving force transmission means and the clutch means . Alternatively, a driving force transmission device sometimes includes a collar preventing scattering of lubricant adhered on a gear.

However, although the above image forming apparatus and the above driving force transmission device allow to prevent the entering of foreign matter (such as grease or toner) from the outside, it cannot cope with the scattering of the grease from the bearing sufficiently. Additionally, the cover and the collar have relatively large size, which increases the cost. The drive transmission device disclosed in JP2002-080141 is configured such that the bearing by which the end portion of the clutch shaft is supported is fitted into the bearing hole formed in the bracket. The sheet feeder disclosed in US2008/025776 includes the rotary shaft connected to the clutch, the torque limiter provided on the rotary shaft, and an inertial member provided to the rotary shaft via the torque limiter. The transmitting device disclosed in US2009/036221 includes the rotatable shaft having the cut-off surface, the bearing member being slid contact with the peripheral surface of the rotational shaft, and the spacer mounted in the clearance between the inner circumferential portion of the bearing member and the cut-off surface of the rotatable shaft.

### SUMMARY

In accordance with the present invention as defined in claim 1, a driving force transmission device includes a clutch, an output shaft, a bearing and an annular shim. The clutch is capable of being switched between a transmission of a rotational force and an interruption of the transmission of the rotational force. The output shaft outputs the rotational force of the clutch. The bearing supports an end portion of the output shaft with grease. The annular shim is disposed around the end portion of the output shaft between the clutch and the bearing. The shim has a through hole through which the end portion of the output shaft is inserted. The through hole has the same shape as a cross section of the end portion of the output shaft. A circumferential edge of the through hole comes into tightly contact with an outer circumferential face of the end portion of the output shaft. The end portion of the output shaft has a flat face parallel to an axial direction of the output shaft. The shim has a protruding piece protruding inwardly from a portion of the circumferential edge of the through hole, the portion corresponding to the flat face. When the end portion of the output shaft is inserted through the through hole, the protruding piece is folded along the flat face so as to come frictionally contact with the flat face.

In accordance with an aspect of the present invention, an image forming apparatus includes the driving force transmission device and a rotational body rotating by transmitting the rotational force by the driving force transmission device.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a front view schematically showing an inner structure of an image forming apparatus.
FIG. 2 is a perspective view showing a driving force transmission device.
FIG. 3 is a sectional view showing an electromagnetic clutch and a bearing, in a first example of the driving force transmission device which is not according to the present invention.
FIG. 4 is a perspective view showing an output shaft, the bearing and a shim, in the first example of the driving force transmission device which is not according to the present invention.
FIG. 5 is a sectional view showing the output shaft, the bearing and the shim, in the first example of the driving force transmission device which is not according to the present invention.
FIG. 6 is a perspective view showing the output shaft, the bearing and the shim, in a second example of the driving force transmission device according to the present invention.
FIG. 7 is a sectional view showing the output shaft, the bearing and the shim, in the second example of the driving force transmission device according to the present invention.
FIG. 8 is a perspective view showing the output shaft, the bearing and the shim, in a third example of the driving force transmission device which is not according to the present invention.
FIG. 9 is a sectional view showing the output shaft, the bearing and the shim, in the third example of the driving force transmission which is not according to the present invention.

### DETAILED DESCRIPTION

Hereinafter, a driving force transmission device and an image forming apparatus according to one embodiment of the present invention will be described with reference to the drawings.

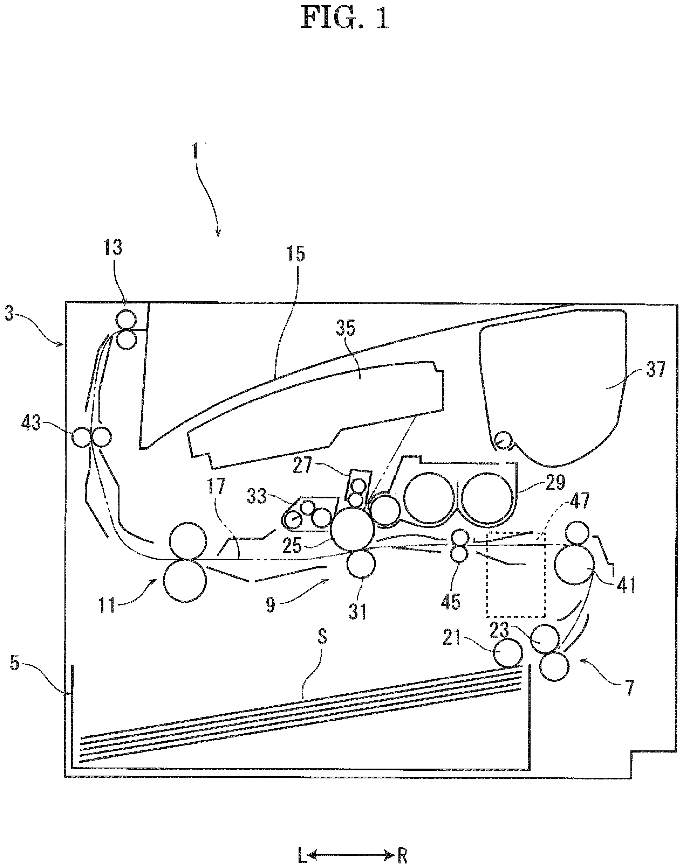

Firstly, with reference to FIG. 1, an entire structure of an image forming apparatus will be described. Hereinafter, a front side of a paper surface of FIG. 1 is defined as a front side of the image forming apparatus. In each figure, Fr, Rr, L and R respectively show a front side, a rear side, a left side and a right side of the image forming apparatus.

An apparatus main body 3 of the image forming apparatus 1 includes a sheet feeding cassette 5, a sheet feeding device 7, an image forming part 9, a fixing device 11, a discharge device 13 and a discharge tray 15. In the apparatus main body 3, a conveyance path 17 is formed from the sheet feeding device 7 to the discharge device 13 through the image forming part 9 and the fixing device 11, and a sheet S stored in the sheet feeding cassette 5 is conveyed along the conveyance path 17.

The sheet feeding device 7 includes a pickup roller 21 and a feed roller 23 which are disposed in order along a sheet feeding direction. The pickup roller 21 comes into contact with the uppermost sheet S among the sheets S stored in the sheet feeding cassette 5 and then rotates to pick up the uppermost sheet S toward the feed roller 23. The feed roller 23 feeds the sheet S picked up by the pickup roller 21 to the conveyance path 17.

The image forming part 9 includes a rotatable photosensitive drum 25, and a charging device 27, a development device 29, a transferring roller 31 and a cleaning device 33 which are disposed around the photosensitive drum 25 along a rotational direction of the photosensitive drum 25. The image forming part 9 further includes an exposure device 35 and a toner container 37.

The charging device 27 charges the photosensitive drum 25 to a constant potential. The exposure device 35 emits laser light on the photosensitive drum 25 to form an electrostatic latent image on the photosensitive drum 25 according to an image data. The development device 29 develops the electrostatic latent image on the photosensitive drum 25 into a toner image. The toner container 37 is connected to the development device 29 and replenishes the toner to the development device 29. The transferring roller 31 transfers the toner image on the photosensitive drum 25 to the sheet S. The cleaning device 33 removes the toner remaining on the photosensitive drum 25.

The fixing device 11 fixes the toner image formed in the image forming part 9 to the sheet S. The discharge device 13 discharges the sheet S on which the toner image is fixed. On the discharge tray 15, the sheet S discharged by the discharge device 13 is stacked.

On the conveyance path 17, two conveyance rollers pair 41 and 43, and a resist rollers pair 45 are provided. Each rollers pair includes a drive roller and a driven roller driven by the drive roller to be rotated. The first conveyance rollers pair 41 is disposed on a downstream side of the sheet feeding device 7 in the sheet conveyance direction. The second conveyance rollers pair 43 is disposed between the fixing device 11 and the discharge device 13. The resist rollers pair 45 is disposed between the first conveyance rollers pair 41 and the image forming part 9. The resist rollers pair 45 stops its rotation to correct the skew of the sheet S, and then rotates at a suitable timing to send the sheet S to the image forming part 9.

The feed roller 23 of the sheet feeding device 7, the drive roller of the first conveyance rollers pair 41 and the drive roller of the resist rollers 45 as a rotational body are driven by a driving force transmission device 47.

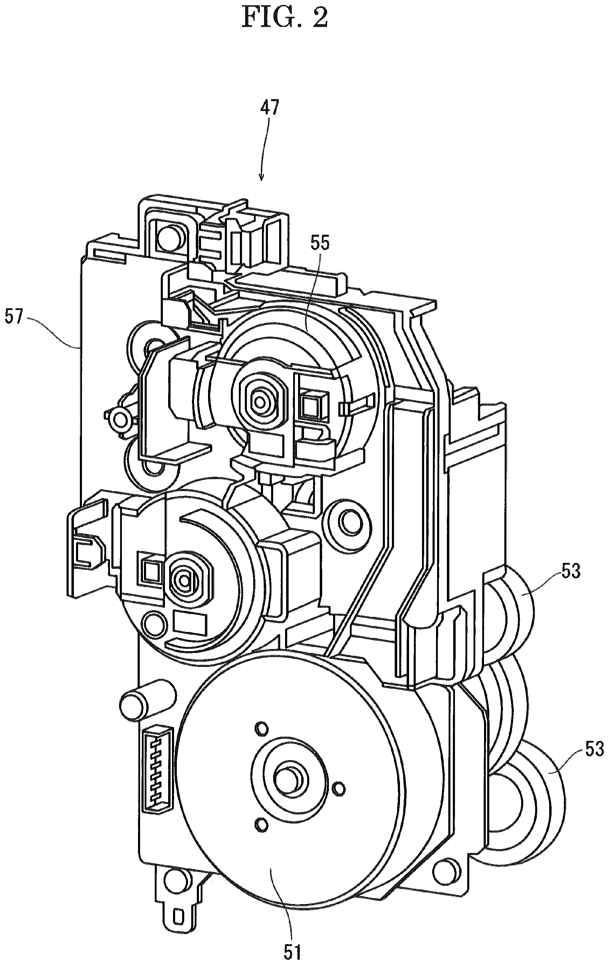

With reference to FIG. 2, the driving force transmission device 47 will be described. FIG. 2 is a perspective view showing the driving force transmission device.

The driving force transmission device 47 includes a motor 51, a plurality of output gears 53 and an electromagnetic clutch 55. The motor 51, the output gears 53 and the electromagnetic clutch 55 are supported by a case 57. To the output gears 53 and the electromagnetic clutch 55, a driving force (a rotational force) of the motor 51 is transmitted via idle gears. The output gears 53 and the electromagnetic clutch 55 are connected to the input gears fixed to the drive rollers. Then, the drive rollers are rotated by the driving force of the motor 51.

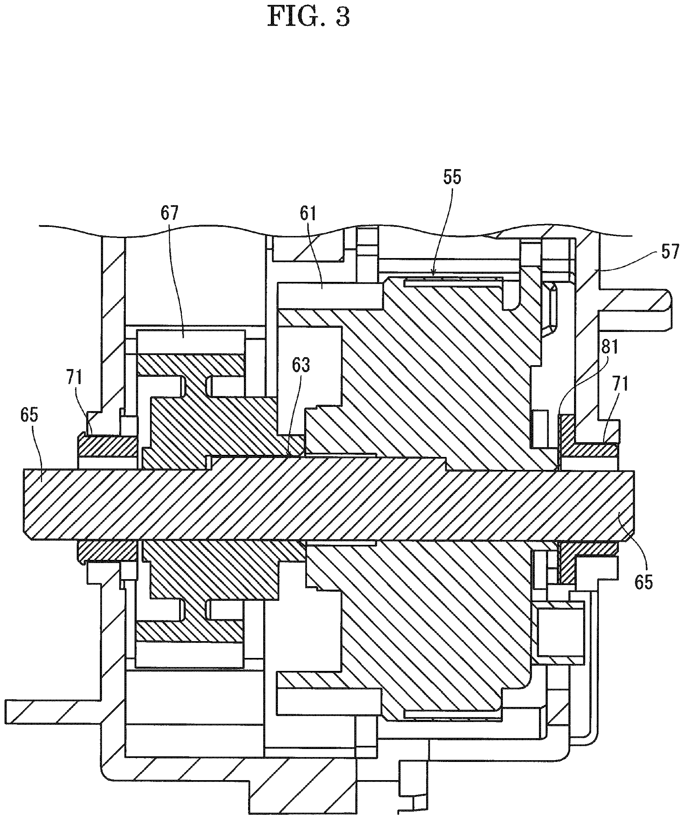

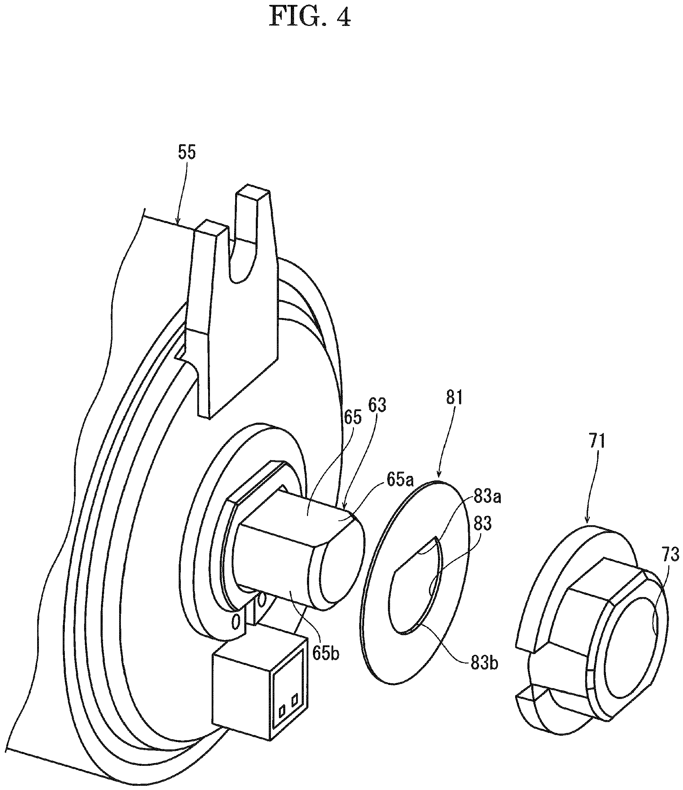

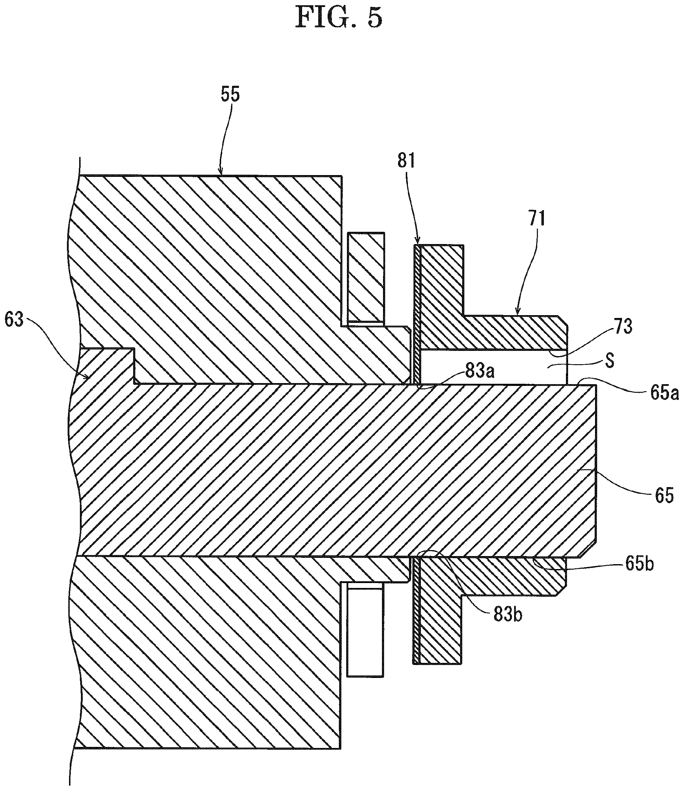

Next, the electromagnetic clutch 55 will be described with reference to FIG. 3 to FIG. 5. FIG. 3 is a sectional view showing the electromagnetic clutch and a bearing, FIG. 4 is a perspective view showing the output shaft, the bearing and a shim, and FIG. 5 is a sectional view showing the output shaft, the bearing and the shim.

The electromagnetic clutch 55 has a rotor and an armature which are connectable by magnetic force. The rotor and the armature are connected by the magnetic force generated by energization, and when the energization is cut off, the magnetic force disappears to disconnect the rotor and the armature. When the rotor and the armature are connected to each other, the rotational force input to an input gear 61 rotating together with the rotor is transmitted to an output shaft 63 rotating together with the armature, and then the output shaft 63 is rotated. When the rotor and the armature are disconnected, the transmission of the rotational force from the input gear 61 to the output shaft 63 is interrupted, and the output shaft 63 is not rotated. In the above manner, depending on the energization and the cutting off the energization, the electromagnetic clutch 55 is switched between an operating state where the rotational force input to the input gear 61 is transmitted to the output shaft 63 and a non-operating state where the transmission of the rotational force to the output shaft 63 is interrupted.

As shown in FIG. 4, the end portion 65 of the output shaft 63 is formed to have a D-shaped cross section. Owing to the above shape, the output shaft 63 is prevented from being rotated with respect to the rotor, and rotated together with the rotor. Specifically, the outer circumferential face of the end portion 65 of the output shaft 63 has a flat face 65a parallel to the axial direction of the output shaft 63 and an approximately half-cylindrically curved face 65b. To the end portion 65 of the output shaft 63, an output gear 67 is supported so as to be rotated together with (refer to FIG. 3). As described above, the output gear 67 is connected to the input gear of the drive roller via the idle gear.

The end portion 65 of the output shaft 63 is rotatably supported by the case 57 via a bearing 71. The bearing 71 has an axial bore 73 having a circular cross section. On the circumferential face of the axial bore 73, grease is applied. Between the bearing 71 and the electromagnetic clutch 55, a shim 81 is disposed.

The shim 81 of a first example will be described. As shown in FIG. 4, the shim 81 is an annular thin piece having a predetermined thickness and the same outer diameter as an outer diameter of the bearing 71. The shim 81 has a center through hole 83. The through hole 83 has the same shape as a cross section of the end portion 65 of the output shaft 63, that is, a D-shape. Specifically, the circumferential edge of the through hole 83 has a straight edge 83a along a direction perpendicular to the axial direction of the output shaft 63 and an arc-shaped curved edge 83b. The shim 81 is made of resin having a high sliding ability (for example, nylon resin (Polyslider (trade name)).

Though the through hole 83 of the shim 81, the end portion 65 of the output shaft 63 (the end portion on an opposite side to the output gear 67) is inserted. By inserting the end portion 65 of the output shaft 63 through the through hole 83 of the shim 81 as described above, the shim 81 is disposed between the electromagnetic clutch 55 and the bearing 71. Because the cross section of the end portion 65 of the output shaft 63 is the same as the shape of the through hole 83, the circumferential edge of the through hole 83 comes into tightly contact with the outer circumferential face of the end portion 65 of the output shaft 63. Specifically, the straight edge 83a of the through hole 83 comes into tightly contact with the flat face 65a of the end portion 65 and the curved edge 83b of the through hole 83 comes into tightly contact with the curved face 65b of the end portion 65.

The end portion 65 of the output shaft 63 has a D-shaped cross section and the axial bore 73 of the bearing 71 has a circular cross section, and then, as shown in FIG. 5 easily, a space S is formed between the flat face 65a of the outer circumferential face of the end portion 65 of the output shaft 63 and the circumferential face of the axial bore 73 of the bearing 71. The shim 81 closes the space S from a side of the electromagnetic clutch 55.

In the driving force transmission device 47 having the above described configuration, when the motor 51 is driven, the rotational force generated by the motor 51 is transmitted to the input gear 61 of the electromagnetic clutch 55 via the idle gear. When the electromagnetic clutch 55 is switched into the operating state, the rotational force transmitted to the input gear 61 is transmitted to the output shaft 63, and the output gear 67 is rotated together with the output shaft 63. The rotation of the output gear 67 is transmitted to the input gear of the drive roller via the idle gear, and the drive roller is rotated.

During the rotation of the output shaft 63, the end portion 65 of the output shaft 63 is slid with respect to the bearing 71. Because the grease is applied on the circumferential face of the axial bore 73 of the bearing 71, the end portion 65 of the output shaft 63 is smoothly slid with respect to the bearing 71. At this time, the grease may be scattered owing to the rotation of the output shaft 63. If the grease is scattered in the space S between the output shaft 63 and the bearing 71, the space S is closed with the shim 81 from a side of the electromagnetic clutch 55 so that the grease is not scattered to a side of the electromagnetic clutch 55. The shim 81 is rotated together with the output shaft 63.

As described above, according to the present embodiment, in a case where a space S is formed between the outer circumferential face of the end portion 65 of the output shaft 63 and the circumferential face of the axial bore 73 of the bearing 71, the space S can be closed with the shim 81. Accordingly, it becomes possible to prevent the grease from being scattered through the space S to a side of the electromagnetic clutch 55 and to suppress an operation failure of the electromagnetic clutch 55 owing to the scattered grease.

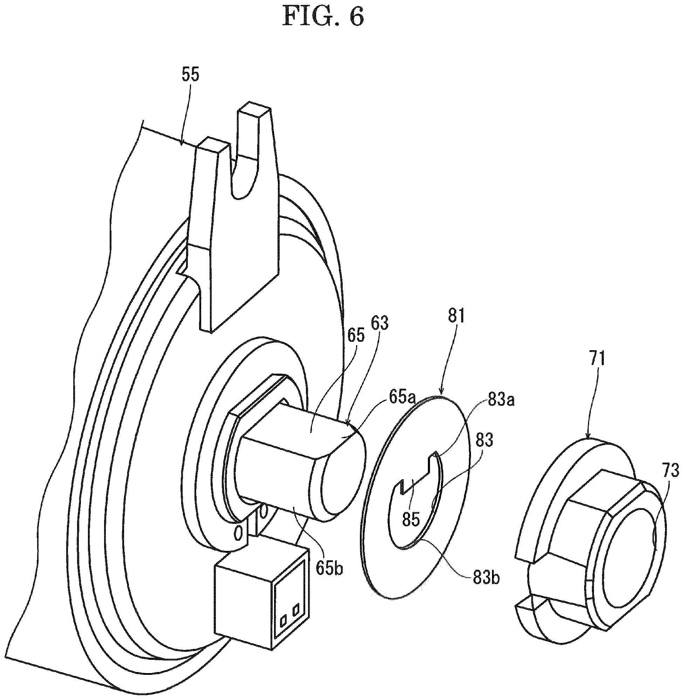

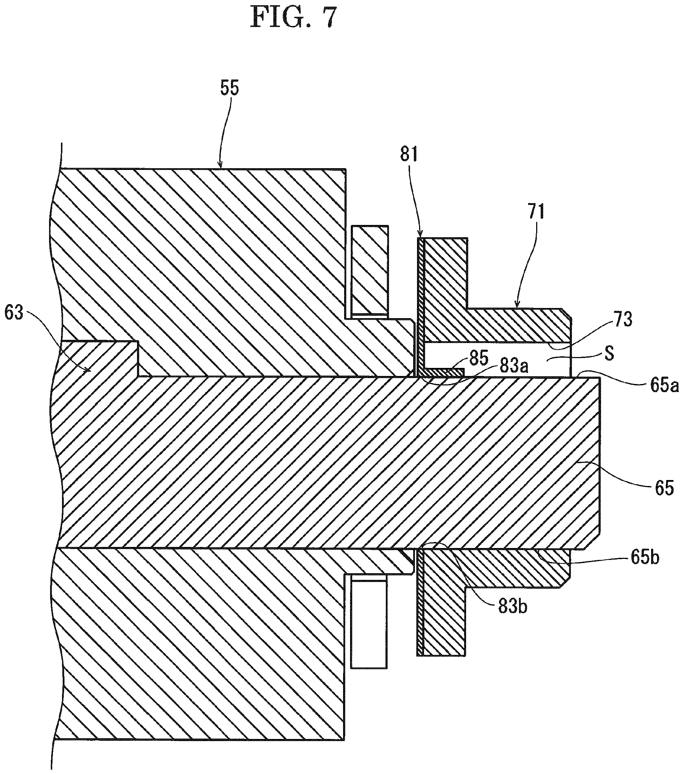

Next, the shim 81 of a second example which is in accordance with the invention will be described with reference to FIG. 6 and FIG. 7. FIG. 6 is a perspective view showing the output shaft, the bearing and the shim, and FIG. 7 is a sectional view showing the output shaft, the bearing and the shim.

The shim 81 of the second example has a protruding piece 85 protruding from the straight edge 83a of the circumferential edge of the through hole 83 toward the center of the through hole 83. The protruding piece 85 has a flat rectangular shape having a width slightly shorter than a length of the straight edge 83a.

When the end portion 65 of the output shaft 63 is inserted through the through hole 83 of the shim 81, the protruding piece 85 is folded at an approximately right angle along the straight edge 83a, or elastically deformed, and then comes into tightly contact with the flat face 65a of the end portion 65, as shown in FIG. 7. In detail, when the end portion 65 of the output shaft 63 is inserted through the through hole 83 of the shim 81, the end face of the output shaft 63 pushes the protruding piece 85 on an opposite side to the electromagnetic clutch 55, and the protruding piece 85 is folded at an approximately right angle along the straight edge 83a, or elastically deformed. Because the protruding piece 85 is folded into the space S between the flat face 65a of the end portion 65 and the circumferential face of the axial bore 73 of the bearing 71, the folded protruding piece 85 does not interfere with the bearing 71.

According to the second example, it becomes possible to prevent the grease from being scattered from the bearing 71 to a side of the electromagnetic clutch 55 through the space S between the output shaft 63 and the bearing 71 and to suppress the operation failure of the electromagnetic clutch 55 owing to the scattered grease. Furthermore, the shim 81 is fixedly attached to the output shaft 63 by a frictional contact between one face of the protruding piece 85 of the shim 81 and the flat face 65a of the end portion 65 of the output shaft 63 and an elastic deformation force of the protruding piece 85.

Because the output shaft 63 is supported by the electromagnetic clutch 55 in a free state, it easily comes out of the electromagnetic clutch 55. Then, it becomes difficult to position the output shaft 63 to the electromagnetic clutch 55, and an assembling work of the electromagnetic clutch 55 to the case 57 becomes difficult. According to the example, the shim 81 is fixedly attached to the output shaft 63 such that the shim 81 restricts the axial movement of the output shaft 63 with respect to the electromagnetic clutch 55. Therefore, the assembling work of the electromagnetic clutch 5 becomes easy.

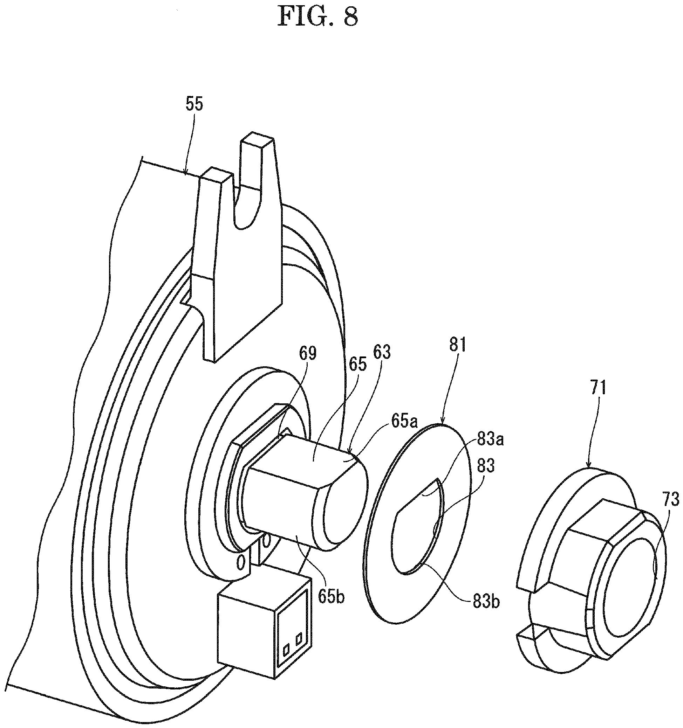

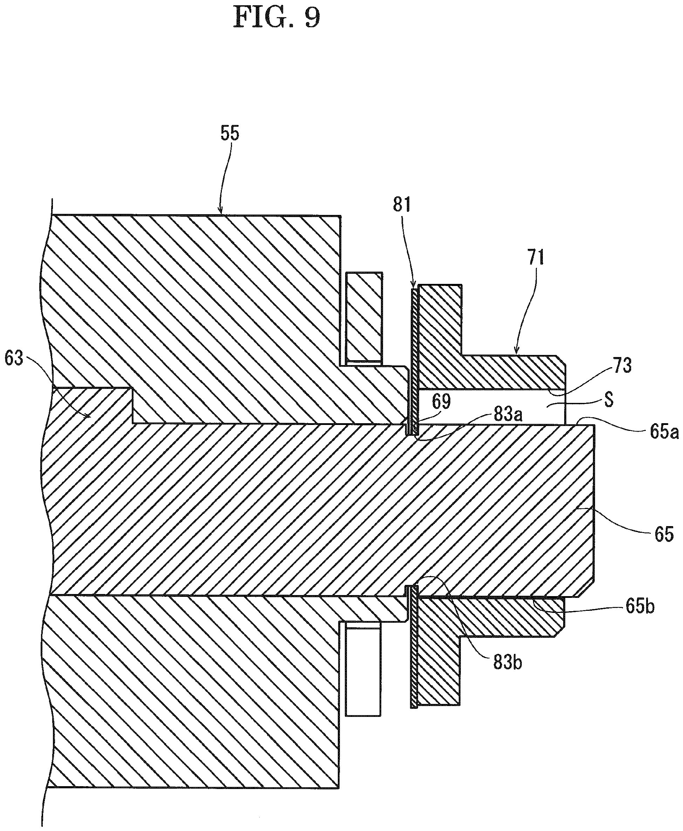

Next, the shim 81 and the output shaft 63 of a third example will be described with reference to FIG. 8 and FIG. 9. FIG. 8 is a perspective view showing the output shaft, the bearing and the shim, and FIG. 9 is a sectional view showing the output shaft, the bearing and the shim.

In the example, an annular groove 69 is formed around the end portion 65 of the output shaft 63 along the circumferential direction. The annular groove 69 has a width slightly wider than a thickness of the shim 81. On the other hand, the through hole 83 of the shim 81 has the same shape as a cross section of the end portion 65 of the output shaft 63 at the bottom face of the annular groove 69.

The shim 81 is disposed around the end portion 65 of the output shaft 63 while being deformed, and the inner circumference of the shim 81 is fitted into the annular groove 69. The circumferential edge of the through hole 83 of the shim 81 comes into tightly contact with the bottom face of the annular groove 69.

In the example, the grease is prevented from being scattered from the bearing 71 to a side of the electromagnetic clutch 55 through the space S so that it becomes possible to suppress the operation failure of the electromagnetic clutch 55 owing to the scattered grease. Additionally, the grease hardly moves around the outer circumferential face of the output shaft 63 so that it becomes possible to prevent the entering of the grease into the electromagnetic clutch 55. Furthermore, because the shim 81 is fixedly attached to the output shaft 63, the axial movement of the output shaft 63 with respect to the electromagnetic clutch 55 is restricted so that the assembling work of the electromagnetic clutch 55 becomes easy.

The annular groove 69 is not necessarily formed around the entire circumference of the end portion 65 of the output shaft 63, but may be formed partially, such as the flat face 65a for example. In this case, the same effect can be obtained efficiently.

The driving force transmission device 47 may be used for a driving force transmission device for rotating the photosensitive drum 25 and an agitating member of the development device 29.

## Claims

1. A driving force transmission device (47) comprising:
a clutch (55) capable of being switched between a transmission of a rotational force and an interruption of the transmission of the rotational force;
an output shaft (63) outputting the rotational force of the clutch (55);
a bearing (71) supporting an end portion (65) of the output shaft (63) with grease; and
an annular shim (81) disposed around the end portion (65) of the output shaft (63) between the clutch (55) and the bearing (71), **characterized in that**
the shim (81) has a through hole (83) through which the end portion (65) of the output shaft (63) is inserted, the through hole (83) has the same shape as a cross section of the end portion (65) of the output shaft (63), and a circumferential edge of the through hole (83) comes into tightly contact with an outer circumferential face of the end portion (65) of the output shaft (63),
the end portion (65) of the output shaft (63) has a flat face (65a) parallel to an axial direction of the output shaft (63),
the shim (81) has a protruding piece (85) protruding inwardly from a portion of the circumferential edge of the through hole (83), the portion corresponding to the flat face (65a), and
when the end portion (65) of the output shaft (63) is inserted through the through hole (83), the protruding piece (85) is folded along the flat face (65a) so as to come frictionally contact with the flat face (65a).

2. The driving force transmission device (47) according to claim 1, wherein
the shim (81) closes a space between the outer circumferential face of the end portion (65) of the output shaft (63) and a circumferential face of an axial bore (73) of the bearing (71).

3. The driving force transmission device (47) according to claim 1 or 2, wherein
the protruding piece (85) is folded to a side of the bearing (71) .

4. An image forming apparatus (1) comprising:
the driving force transmission device (47) according to any one of claims 1 to 4, and
a rotational body (23) rotating by transmitting the rotational force by the driving force transmission device (47) .

## Patentansprüche

1. Antriebskraft-Übertragungsvorrichtung (47), umfassend:
eine Kupplung (55), die zwischen einer Übertragung einer Rotationskraft und einer Unterbrechung der Übertragung der Rotationskraft umgeschaltet werden kann;
eine Abtriebswelle (63), die die Rotationskraft der Kupplung (55) abgibt;
ein Lager (71), das einen Endabschnitt (65) der Abtriebswelle (63) mit Schmierung stützt; und
eine ringförmige Scheibe (81), die um den Endabschnitt (65) der Abtriebswelle (63) zwischen der Kupplung (55) und dem Lager (71) angeordnet ist, **dadurch gekennzeichnet, dass**
die Scheibe (81) ein Durchgangsloch (83) aufweist, durch das der Endabschnitt (65) der Abtriebswelle (63) eingeführt wird, das Durchgangsloch (83) die gleiche Form wie ein Querschnitt des Endabschnitts (65) der Abtriebswelle (63) aufweist und eine Umfangskante des Durchgangslochs (83) in engen Kontakt mit einer äußeren Umfangsfläche des Endabschnitts (65) der Abtriebswelle (63) kommt,
der Endabschnitt (65) der Abtriebswelle (63) eine ebene Fläche (65a) parallel zu einer axialen Richtung der Abtriebswelle (63) aufweist,
die Scheibe (81) ein vorstehendes Stück (85) aufweist, das von einem Abschnitt der Umfangskante des Durchgangslochs (83) nach innen vorsteht, wobei der Abschnitt der ebenen Fläche (65a) entspricht, und
wenn der Endabschnitt (65) der Abtriebswelle (63) durch das Durchgangsloch (83) eingeführt wird, das vorstehende Stück (85) entlang der ebenen Fläche (65a) gefaltet wird, so dass es in Reibungskontakt mit der ebenen Fläche (65a) kommt.

2. Antriebskraft-Übertragungsvorrichtung (47) nach Anspruch 1, wobei
die Scheibe (81) einen Raum zwischen der äußeren Umfangsfläche des Endabschnitts (65) der Abtriebswelle (63) und einer Umfangsfläche einer axialen Bohrung (73) des Lagers (71) schließt.

3. Antriebskraft-Übertragungsvorrichtung (47) nach Anspruch 1 oder 2, wobei das vorstehende Teil (85) zu einer Seite des Lagers (71) gefaltet ist.

4. Bilderzeugungsgerät (1), umfassend:
die Antriebskraft-Übertragungsvorrichtung (47) nach einem der Ansprüche 1 bis 4, und
einen Rotationskörper (23), der durch Übertragung der Rotationskraft durch die Antriebskraft-Übertragungsvorrichtung (47) rotiert.

## Revendications

1. Un dispositif (47) de transmission de force motrice, comprenant :
un embrayage (55) apte à être commuté entre une transmission d'une force de rotation et une interruption de la transmission de la force de rotation ;
un arbre de sortie (63) délivrant la force de rotation de l'embrayage (55) ;
un palier (71) supportant une partie d'extrémité (65) de l'arbre de sortie (63) avec de la graisse ; et
une cale annulaire (81) disposée autour de la partie d'extrémité (65) de l'arbre de sortie (63) entre l'embrayage (55) et le palier (71), **caractérisé en ce que**
la cale (81) a un trou traversant (83) à travers lequel la partie d'extrémité (65) de l'arbre de sortie (63) est insérée, le trou traversant (83) a la même forme qu'une section transversale de la partie d'extrémité (65) de l'arbre de sortie (63), et un bord circonférentiel du trou traversant (83) vient en contact étroit avec une face circonférentielle extérieure de la partie d'extrémité (65) de l'arbre de sortie (63),
la partie d'extrémité (65) de l'arbre de sortie (63) a une face plate (65a) parallèle à une direction axiale de l'arbre de sortie (63),
la cale (81) a une portion en saillie (85) faisant saillie vers l'intérieur à partir d'une partie du bord circonférentiel du trou traversant (83), la partie correspondant à la face plate (65a), et
lorsque la partie d'extrémité (65) de l'arbre de sortie (63) est insérée à travers le trou traversant (83), la portion en saillie (85) est repliée le long de la face plate (65a) de manière à venir en contact par friction avec la face plate (65a) .

2. Le dispositif (47) de transmission de force motrice selon la revendication 1, dans lequel
la cale (81) ferme un espace entre la face circonférentielle externe de la partie d'extrémité (65) de l'arbre de sortie (63) et une face circonférentielle d'un alésage axial (73) du palier (71).

3. Le dispositif (47) de transmission de force motrice selon la revendication 1 ou la revendication 2, dans lequel
la portion en saillie (85) est repliée sur un côté du palier (71).

4. Un appareil (1) de formation d'image comprenant :
le dispositif (47) de transmission de force motrice selon l'une quelconque des revendications 1 à 4, et
un corps rotatif (23) tournant en transmettant la force de rotation par le dispositif (47) de transmission de force motrice.
